# EUROPEAN PATENT SPECIFICATION

(11) **EP 2 180 213 B1**
(45) Date of publication and mention of the grant of the patent: **07.03.2012**
(21) Application number: 09173814.6
(22) Date of filing: 22.10.2009
(51) Int. Cl.: F16H 63/30, F16H 63/20, F16D 23/06, F16H 61/04

(54) **Manual transmission**
Schaltgetriebe
Transmission manuelle

(30) Priority: 23.10.2008 JP 2008273488
(43) Date of publication of application: 28.04.2010
(73) Proprietor: Toyota Jidosha Kabushiki Kaisha, Toyota-shi, Aichi-ken, 471-8571 (JP)
(72) Inventor: Nagai, Kazunari c/o Toyota Jidosha Kabushiki Kaisha, Aichi-ken 471-8571 (JP); Naito, Koji c/o Toyota Jidosha Kabushiki Kaisha, Aichi-ken 471-8571 (JP)
(74) Representative: Albutt, Anthony John

(56) References cited:
- EP-A2- 1 031 765
- DE-A1- 3 310 749
- DE-A1- 10 161 596
- DE-A1-102006 038 524
- FR-A1- 2 886 999

## Description

### BACKGROUND OF THE INVENTION

### 1. Field of the Invention

The invention relates to a manual transmission that is mounted in a vehicle such as a motor vehicle or the like. In particular, the invention relates to a measure for improving the operability of a shift lever at the time of a gear shift.

### 2. Description of the Related Art

Conventionally, in a vehicle manual transmission, a speed change step is selected by a driver (driving person) operating a shift lever. For example, in a floor shift type manual transmission in which the shift lever is disposed on the floor in the cabin of the vehicle, the shift lever is disposed so as to be movable for operation of the transmission, within a shift gate that is a groove extending in the left-right directions (transverse directions of the vehicle) and the front-rear directions (longitudinal directions of the vehicle). Then, after a select operation in which the shift lever is operated in one of the left-right directions following this shift gate, a shift operation of operating the shift lever in one of the front-rear directions following the shift gate is performed to establish a desired speed change step. That is, the manual transmission is constructed so that the operation force of the select operation or the operation force of the shift operation is transmitted to a gear shift mechanism via a cable or a link to move a synchronizer device or a gear so as to attain a speed change step.

Concretely, for example, as disclosed in Japanese Patent Application Publication No. 2001-280431 (JP-A-2001-280431), Japanese Patent Application Publication No. 11-101269 (JP-A-11-101269), or Japanese Patent Application Publication No. 2001-241464 (JP-A-2001-241464), the gear shift mechanism includes a shift/select shaft, a shift inner lever, shift fork heads (hereinafter, simply referred to as "heads"), fork shafts, shift forks, etc. The shift/select shaft is pivoted and slid by the select operation force or the shift operation force transmitted thereto from the shift lever via a cable or the like. The shift inner lever is fixed to the shift/select shaft, and includes an arm portion that extends in a direction orthogonal to the axis. The arm portion of the shift inner lever pivots to such a position that the arm portion can engage with a predetermined one of the heads (a position that faces the predetermined head) by a movement of the shift/select shaft in a select direction (e.g., a pivoting movement thereof as mentioned above) which is caused by a select operation of the shift lever. By a movement of the shift/select shaft in a shift direction (e.g., a sliding movement thereof as mentioned above) which is caused by a shift operation of the shift lever, the arm portion transmits the operation force to the predetermined head. The heads, the fork shafts and the shift forks are integrally interlinked, and the operation force transmitted from the arm portion of the shift inner lever to a predetermined head is transmitted to the corresponding shift fork via the corresponding fork shaft. Due to this, the shift fork actuates a corresponding one of the synchronizer devices so as to attain a predetermined speed change step.

For example, in a five-forward-speed-step transmission, a first-speed-step head and a second-speed-step head are disposed facing each other on a fork shaft (first fork shaft), and a third-speed-step head and a fourth-speed-step head are disposed facing each other on another fork shaft (second fork shaft). Besides, a fifth-speed-step head is disposed on a fifth-speed-step fork shaft (third fork shaft). Besides, the shift forks provided are a first/second-speed-step shift fork that is linked to the first fork shaft and that is engaged with a first/second-speed-step synchronizer device, a third/fourth-speed-step shift fork that is linked to the second fork shaft and that is engaged with a third/fourth-speed-step synchronizer device, and a fifth-speed-step shift fork that is linked to the third fork shaft and that is engaged with a fifth-speed-step synchronizer device.

Thus, the shift/select shaft, receiving the operation force from the shift lever, pivots and slides. Due to the pivoting and sliding of the shift/select shaft, the arm portion of the shift inner lever engages with a predetermined head, so that the shift operation force on that head is transmitted to the shift fork via the fork shaft. Then, due to the movement of the shift fork, the synchronizer device for a predetermined speed change step is actuated, whereby a speed change step corresponding to the operated position of the shift lever is established.

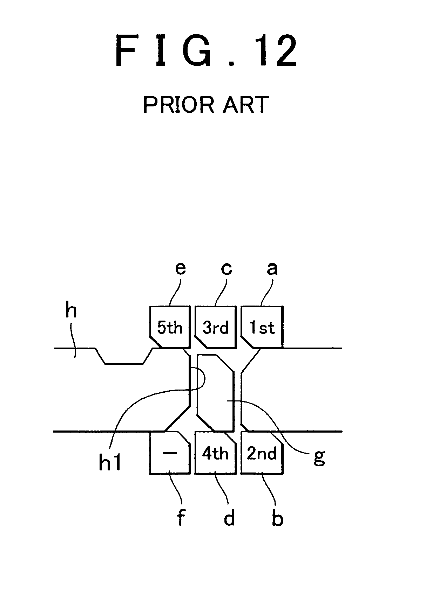

FIG. 12 is a developed view of various members (heads a to f, an arm portion g of a shift inner lever, an interlock plate h) taken from a shift/select shaft side in a related-art manual transmission, showing an example of the engaged states of the arm portion g of the shift inner lever with respect to the heads a to f (in this example state, the arm portion g is in a neutral position). The heads are positioned so that a first-speed-step head a and a second-speed-step head b face each other, and a third-speed-step head c and a fourth-speed-step head d face each other, and a fifth-speed-step head e and a fifth-speed-step-disengaging head f (a head with which the arm portion g of the shift inner lever engages for the shift from a fifth speed step position to a neutral position) face each other. That is, an arrangement is made such that as the shift inner lever pivots along with the pivoting of the shift/select shaft, the arm portion g moves in the leftward or rightward direction in the drawing to be positioned between one of the foregoing three pairs of heads a to f.

Incidentally, the interlock plate h prevents double-meshing by restraining the simultaneous passage of two or more heads. Therefore, the interlock plate h has a head passageway h1 through which only the arm portion g of the shift inner lever and one of the heads can pass at a time. Besides, this interlock plate h is pivotable integrally with the shift/select shaft and the shift inner lever (movable in the rightward and leftward directions in FIG. 12).

Due to this construction, the foregoing select operation moves the arm portion g of the shift inner lever, together with the interlock plate h, between the heads to reach a position where the arm portion g can engage with the heads that correspond to the foregoing select operation. Then, by the foregoing shift operation, the arm portion g of the shift inner lever engages with a predetermined one of the adjacent two heads, and moves the fork shaft and the shift fork so as to attain the speed change step that corresponds to the operated position of the shift lever.

Besides, Japanese Patent Application Publication No. 2001-280431 (JP-A-2001-280431) and Japanese Patent Application Publication No. 11-101269 (JP-A-11-101269) disclose a construction in which, in order to prevent a synchronizer key that constitutes a synchronizer device from moving to a side where a speed change gear is not provided, a stopper is provided for restraining the movement range of the synchronizer key by contacting an end surface of the synchronizer key.

With regard to the manual transmission as described above, there is a possibility of deterioration of the operability of the shift lever at the time of a speed shift operation as described below. This will be concretely described below.

A problem to be solved by the invention occurs, for example, when the transmission is downshifted from the fifth speed step to the fourth speed step.

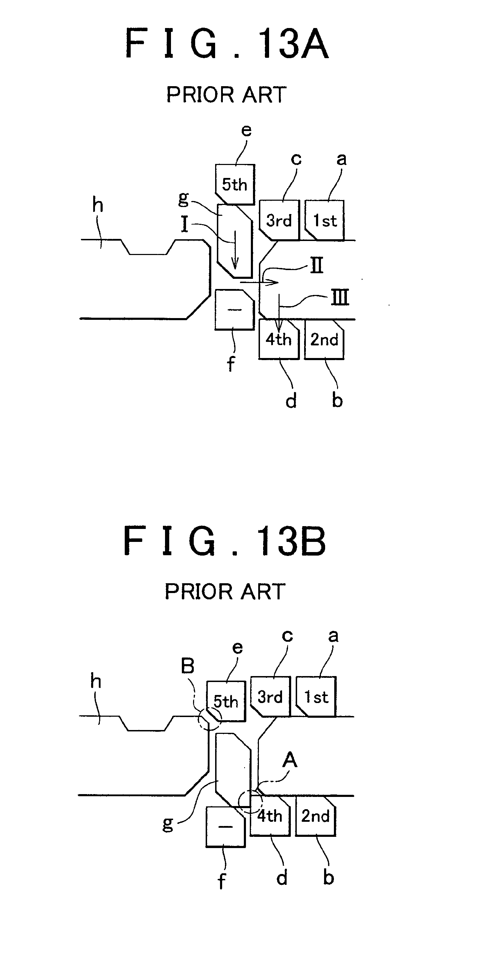

FIG. 13A shows a positional relationship among the heads a to f, the arm portion g of the shift inner lever, and the interlock plate h when the shift lever is at the fifth speed step position. In this state, the fifth-speed-step head e and the fifth-speed-step-disengaging head f have been displaced to the fifth speed step side (displaced to an upper side in the drawing).

Then, when the shift lever is operated by a driver from the fifth speed step position to a neutral position in the shift direction for the downshift to the fourth speed step, the fifth-speed-step head e and the fifth-speed-step-disengaging head f receive the operation force in the shift disengagement direction from the shift/select shaft and the shift inner lever, and reach the neutral position in the shift direction (see an arrow I in FIG. 13A). After that, the shift lever is operated to the neutral position in the select direction (the moving direction of the arm portion g at this time is indicated by an arrow II in FIG. 13A), and the shift lever is operated toward the fourth speed step (the moving direction of the arm portion g at this time is indicated by an arrow III in FIG. 13A). The speed shift operation between speed change steps that are different from each other in the select position and are also different from each other in the shift position as well is generally termed "diagonal operation".

During execution of the foregoing diagonal operation, more specifically, when the shift lever is moved from the fifth speed step position to the neutral position in the shift direction, the arm portion g of the shift inner lever in the gear shift mechanism moves from the fifth speed step position to the neutral position in the shift direction, and accordingly the fifth-speed-step head e and the fifth-speed-step-disengaging head f also move to the neutral position.

However, in the case where the operation force on the shift inner lever in the shift disengaging direction is relatively large, there is a possibility of the arm portion g of the shift inner lever exceeding the neutral position. This will bring about a situation in which the fifth-speed-step head e and the fifth-speed-step-disengaging head f are displaced to a side of the neutral position that is remote from the fifth speed step side as shown in FIG. 13B (at the lower side of the neutral position).

If in such a situation, a select operation toward the fourth speed step is performed, the arm portion g of the shift inner lever may possibly be caught on the fourth-speed-step head d (see a portion A in FIG. 13B) so that the shift inner lever cannot be moved in the select direction, or the interlock plate h may possibly be caught on the fifth-speed-step head e (see a portion B in FIG. 13B) so that the interlock plate h cannot be moved in the select direction.

That is, when the driver performs the diagonal operation of downshift from the fifth speed step to the fourth speed step, the catching or obstruction occurs during the operation (at the time of switch from the shift disengaging operation to the select operation) so that the smooth downshift to the fourth speed step cannot be carried out, thus causing discomfort to the driver.

Besides during the foregoing diagonal operation, this situation may also possibly occur in a similar fashion in the case of a speed shift operation in which the speed step is downshifted from the fifth speed step to the second speed step, or downshifted from the fifth speed step to the third speed step (a so-called skipped speed shift operation).

Although in Japanese Patent Application Publication No. 2001-280431 (JP-A-2001-280431) and Japanese Patent Application Publication No. 11-101269 (JP-A-11-101269), the movement range of the synchronizer key is restrained by the provision of the stopper, the stopper is provided merely to prevent the synchronizer key from falling apart. Therefore, even with the construction described in these patent applications, there is a possibility of the shift inner lever's arm portion exceeding the neutral position as described above, which will bring about the foregoing problem.

### SUMMARY OF THE INVENTION

The invention has been accomplished in view of the foregoing circumstances, and provides a manual transmission capable of avoiding obstruction in the select operation direction at the time of transition to the select operation after the shift-disengaging operation in a downshift operation or the like, and capable of bettering the operability of the shift lever.

Therefore, as a solution principle in the invention, the movement of a sleeve of a synchronizer device in a disengagement shift direction which occurs along with a disengagement shift operation is restrained at the time point when the sleeve reaches a substantially neutral position (a position at which the select operation is not obstructed), whereby obstruction of the movement of a member in the select direction does not occur.

Concretely, a prerequisite to the invention is a manual transmission that includes: a rotation shaft that transmits rotation drive force from a drive source; a clutch hub provided on the rotation shaft so as to rotate integrally with the rotation shaft; a sleeve that is engaged with an outer peripheral side of the clutch hub so as to rotate integrally with the clutch hub, and that, due to a shift operation force from a shift lever, moves in a shift direction along an axis of the rotation shaft from a neutral position where the sleeve does not receive the shift operation force so as to cause the rotation shaft and a speed change gear to synchronously rotate, and a stopper that restricts a movement range of the sleeve when the sleeve moves in a disengagement shift direction along the axis of the rotation shaft due to a disengagement shift operation force from the shift lever. The manual transmission provided by the invention further includes sleeve movement restriction means for giving to the sleeve a holding force for holding the sleeve at a substantially neutral position by restricting movement of the sleeve moving to a side of the stopper when the sleeve reaches the substantially neutral position as the sleeve moves to the stopper side due to the disengagement shift operation force from the shift lever.

Herein, the aforementioned "neutral position" and the "substantially neutral position" are defined as a position at which a member that transmits the select operation force from the shift lever when the shift lever is operated in a select direction, that is, a position at which a member that receives the select operation force from the shift lever does not interfere with another member when moving in the select direction (e.g., a position at which the arm portion of the shift inner lever does not interfere with a head, or at which an interlock plate does not interfere with a head).

As described above, when, from a state in which a speed change step has been established by moving the sleeve in a shift direction from the neutral position, the sleeve is moved in the disengagement shift direction (toward the neutral position) so as to disengage the speed change step, the sleeve moves toward the stopper. At the time point at which the sleeve reaches the substantially neutral position during an intermediate portion of the movement of the sleeve, that is, during the stage when the sleeve has not contacted the stopper, the sleeve movement restriction means gives to the sleeve a holding force for holding the sleeve at the substantially neutral position by restricting the sleeve from moving to the stopper side. That is, the sleeve is restrained from moving in the disengagement shift direction at the substantially neutral position during an intermediate portion of the movement of the sleeve in the disengagement shift direction. As the sleeve is held at the substantially neutral position in this manner, operation force transmitting-members (e.g., the heads, an arm portion of a shift inner lever, etc.) disposed on or along the path from the shift lever to the sleeve are also held at their substantially neutral positions. Therefore, during the subsequent select operation, it does not happen that a member that transmits the select operation force from the shift lever is caught on another member, and the operation at the time of transition from the disengagement shift operation to the select operation is smooth. Thus, good operability is secured.

The sleeve movement restriction means is provided with a shifting key that moves in the shift direction when the sleeve is moved in the shift direction due to the shift operation force from the shift lever. Then, when the sleeve is moved to the stopper side due to the disengagement shift operation force from the shift lever, the shifting key also moves to the stopper side, and contacts the stopper before the sleeve contacts the stopper. The shifting key, positioned by the contact with the stopper, gives the holding force to the sleeve when the sleeve reaches the substantially neutral position.

Concrete examples of the mechanism for transmitting the operation force from the shift lever to the sleeve include mechanisms described below. That is, the operation force from the shift lever is transmitted to the sleeve via an operation force-transmitting mechanism. This operation force-transmitting mechanism is provided with: a shift inner lever that includes an arm portion that is movable in a select direction due to a select operation force from the shift lever; a shift fork head group in which a plurality of pairs of shift fork heads, each pair of shift fork heads being disposed facing each other across a select-direction movement path of the arm portion, are disposed along the select-direction movement path of the arm portion, and in which one of the pairs of the shift fork heads selectively become engageable with the arm portion as the arm portion moves along the select-direction movement path; and fork shafts each of which moves if a corresponding pair of shift fork heads are moved in the shift direction from a neutral position by the arm portion of the shift inner lever moving in the shift direction due to the shift operation force received from the shift lever when the arm portion is selectively engageable with the corresponding pair of shift fork heads. Then, when the sleeve is held at the substantially neutral position by the sleeve movement restriction means, the arm portion of the shift inner lever holds a pair of shift fork heads engaged with the arm portion, at a substantially neutral position in the shift direction which substantially coincides with the position of other shift fork heads in the shift direction.

That is, by holding the sleeve at the substantially neutral position, the sleeve movement restriction means defines the position of the arm portion of the shift inner lever that is linked to the sleeve via a fork shaft, a shift fork head, etc., whereby the shift-direction position of a pair of shift fork heads engaged with the arm portion is held at the substantially neutral position. In other words, by causing all the shift-direction positions of the pairs of shift fork heads that constitute the shift fork head group to substantially coincide with each other in the shift direction, the arm portion can be positioned at the center of the select-direction movement path, so that the arm portion can be moved along the select-direction movement path without interfering with any head (can be moved in the select directions).

As a concrete construction of the sleeve movement restriction means, it is advisable to adopt a construction in which when the sleeve is at the neutral position, an interval between the shifting key and a contact portion of the stopper which the shifting key contacts is shorter than an interval between the sleeve and a contact portion of the stopper which the sleeve contacts.

As a construction of the shifting key in the foregoing construction, the shifting key is provided with an urging member that gives an urging force toward an inner surface of the sleeve, and a latch member that receives the urging force of the urging member. Besides, a recessed portion with which the latch member is able to engage is formed in the inner surface of the sleeve. When the sleeve reaches the substantially neutral position with the shifting key being in contact with the stopper as the sleeve is moved to the stopper side due to the disengagement shift operation force from the shift lever, the latch member fits into the recessed portion of the sleeve due to the urging force of the urging member, and therefore holds the sleeve at the substantially neutral position.

These constructions make it possible to effectively hold the sleeve at the substantially neutral position by the holding force that is given to the sleeve from the shifting key, and to favorably carry out the function of avoiding or preventing obstruction in the transition from the disengagement shift operation of the shift lever to the select operation thereof. Besides, since the holding force for holding the sleeve at the substantially neutral position is obtained by the elastic force from the shifting key, the subsequent shift operation (e.g., the shift operation to the fifth speed step) can easily be carried out, that is, the shift lever can easily be operated in the shift direction merely by providing only a shift operation force that overcomes the elastic force from the shifting key, that is, large shift operation force is not needed.

It is desirable that the shifting key be disposed at each of a plurality of sites that are arranged equiangularly in the circumferential direction, at the inner peripheral side of the sleeve. Besides, it is desirable that the urging member be a coil spring or a circular spring. Furthermore, it is desirable that the latch member be a lock ball or a platy key.

Thus, in the invention, at the time of the disengagement shift operation, the movement of the sleeve of the synchronizer device in a disengagement shift direction which is associated with the disengagement shift operation is held at the substantially neutral position. Therefore, it does not happen that members that transmit the select operation force from the shift lever are caught on or obstructed by each other. Thus, the operation in the transition from the disengagement shift operation to the select operation is smooth, and good operability can be secured.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a sectional view showing a gear layout of a manual transmission in accordance with an embodiment of the invention;
FIG 2 is a diagram schematically showing a shift pattern of the manual transmission, which has five forward speed steps;
FIG. 3 is a sectional view of forward speed step engagement portions and their peripheries in a select/shift mechanism of the manual transmission, viewed in the direction of an axis of a shift/select shaft;
FIG. 4 is a sectional view of engagement portions between a fifth/sixth-speed fork shaft and a third synchromesh mechanism in the manual transmission;
FIG. 5 is a sectional view for describing a support structure of a shifting key of the manual transmission;
FIG. 6 is a sectional view of shift forks and their peripheries in the manual transmission, viewed in the direction of the axis of the shift/select shaft;
FIG. 7A is a diagram showing the positions of a sleeve and shifting keys in a fifth speed step established state of the manual transmission;
FIG. 7B is a diagram showing the positions of an arm portion of a shift inner lever and heads in the fifth speed step established state of the manual transmission;
FIG. 8A is a diagram showing the positions of the sleeve and the shifting keys in an intermediate state of the disengagement from the fifth speed step of the manual transmission;
FIG. 8B is a diagram showing the positions of the arm portion of the shift inner lever and the heads in the intermediate state of the disengagement from the fifth speed step of the manual transmission;
FIG. 9A is a diagram showing the positions of the sleeve and the shifting keys at the time of completion of the disengagement from the fifth speed step of the manual transmission;
FIG. 9B is a diagram showing the positions of the arm portion of the shift inner lever and the heads at the time of completion of the disengagement from the fifth speed step of the manual transmission;
FIG. 10 is a diagram showing the positions of the arm portion of the shift inner lever and the heads in a fourth speed step established state of the manual transmission;
FIG. 11A is a diagram corresponding to FIG. 9A which shows a modification of the shifting keys of the manual transmission;
FIG. 11B is a diagram showing another modification of the shifting keys of the manual transmission;
FIG. 12 is a diagram showing the positions of the arm portion of the shift inner lever and the heads in the neutral state of the related-art manual transmission;
FIG. 13A is a diagram showing the positions of the arm portion of the shift inner lever and the heads in the fifth speed step established state of the related-art manual transmission; and
FIG. 13B is a diagram showing the positions of the arm portion of the shift inner lever and the heads when the disengagement from the fifth speed step is performed in the related-art manual transmission.

### DETAILED DESCRIPTION OF EMBODIMENTS

Hereinafter, embodiments of the invention will be described with reference to the drawings. In an embodiment described below, the invention is applied to a five-forward-speed-and-one-reverse-speed synchronous mesh manual transmission that is mounted in an FF (front engine, front wheel drive) vehicle.

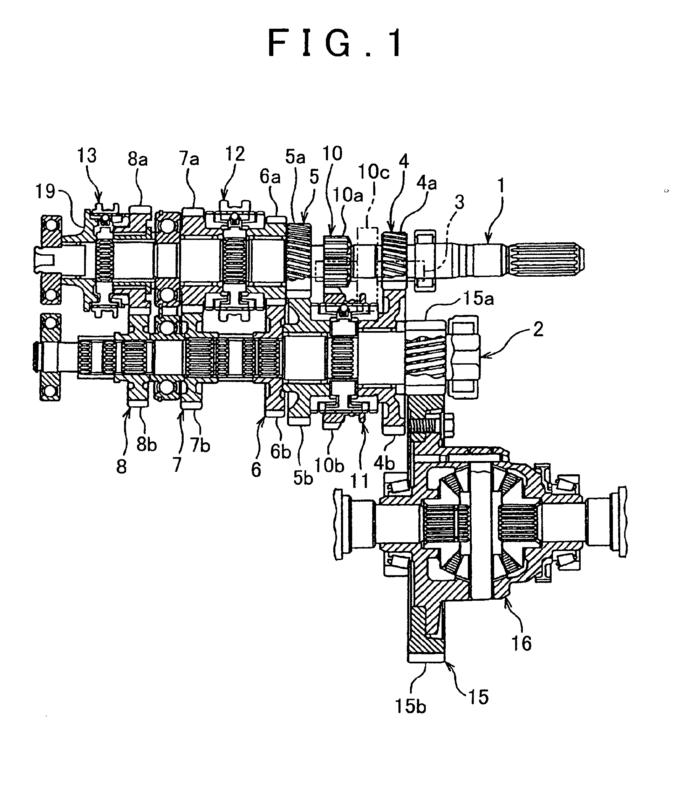

FIG. 1 is a side view of the gear layout of a manual transmission in accordance with the embodiment, in which a portion of the layout is shown in a sectional view. In the gear layout shown in FIG. 1, an input shaft (rotary shaft) 1, an output shaft 2 and a reverse shaft 3 (shown by two-dot dashed line in FIG. 1) are housed within a transmission case (not shown), and are disposed parallel to one another. These shafts are freely rotatably supported by the transmission case.

The input shaft 1 is linked to a crankshaft of an engine (drive source) (not shown) via a clutch mechanism. By an engaging action of the clutch mechanism, rotation drive force of the engine is input to the input shaft 1.

A plurality of speed change gear trains 4 to 8 and 10 for establishing the speed change steps of the manual transmission, that is, the first to fifth forward speed steps and the reverse speed step, are provided between the input shaft 1 and the output shaft 2. Concretely, the gear trains for the forward speed steps are a first-speed gear train 4, a second-speed gear train 5, a third-speed gear train 6, a fourth-speed gear train 7, and a fifth-speed gear train 8 that are disposed in that order from the right side to the left side in FIG. 1 in the axis direction. Besides, the gear train for the reverse speed step is a reverse gear train 10.

The first-speed gear train 4 includes a first-speed drive gear 4a that is attached to the input shaft 1 so as to rotate integrally with the input shaft 1 (so as to be un-rotatable relative to the input shaft 1), a first-speed driven gear 4b that is mounted on the output shaft 2 freely rotatably relative to the output shaft 2. The first-speed drive gear 4a and the first-speed driven gear 4b are in mesh with other.

The second-speed gear train 5 includes a second-speed drive gear 5a that is attached to the input shaft 1 so as to rotate integrally therewith, and a second-speed driven gear 5b that is mounted on the output shaft 2 freely rotatably relative to the output shaft 2. The second-speed drive gear 5a and the second-speed driven gear 5b are in mesh with each other.

The third-speed gear train 6 includes a third-speed drive gear 6a that is mounted on the input shaft 1 freely rotatably relative to the input shaft 1, and a third-speed driven gear 6b that is attached to the output shaft 2 so as to rotate integrally therewith. The third-speed drive gear 6a and the third-speed driven gear 6b are in mesh with each other.

The fourth-speed gear train 7 includes a fourth-speed drive gear 7a that is mounted on the input shaft 1 freely rotatably relative to the input shaft 1, and a fourth-speed driven gear 7b that is attached to the output shaft 2 so as to rotate integrally therewith. The fourth-speed drive gear 7a and the fourth-speed driven gear 7b are in mesh with each other.

The fifth-speed gear train 8 includes a fifth-speed drive gear 8a that is mounted on the input shaft 1 freely rotatably relative to the input shaft 1, and a fifth-speed driven gear 8b that is attached to the output shaft 2 so as to rotate integrally therewith. The fifth-speed drive gear 8a and the fifth-speed driven gear 8b are in mesh with each other.

The actions of switching between the speed change gear trains (speed shift/select actions) are carried out by three synchromesh mechanisms (synchronizer devices) 11, 12 and 13.

The first synchromesh mechanism 11 is provided on the output shaft 2 between the first-speed driven gear 4b and the second-speed driven gear 5b. When the first synchromesh mechanism 11 operates to the side of the first-speed driven gear 4b, the first-speed driven gear 4b is linked to the output shaft 2 so as to rotate integrally with the output shaft 2, so that the transmission of power from the input shaft 1 to the output shaft 2 is carried out between the first-speed drive gear 4a and the first-speed driven gear 4b (the first-speed step is established). On the other hand, when the first synchromesh mechanism 11 operates to the second-speed driven gear 5b side, the second-speed driven gear 5b is linked to the output shaft 2 so as to rotate integrally therewith, so that the transmission of power from the input shaft 1 and the output shaft 2 is carried out between the second-speed drive gear 5a and the second-speed driven gear 5b (the second speed step is established).

The second synchromesh mechanism 12 is provided on the input shaft 1 between the third-speed drive gear 6a and the fourth-speed drive gear 7a. When the second synchromesh mechanism 12 operates to the third-speed drive gear 6a side, the third-speed drive gear 6a is linked to the input shaft 1 so as to rotate integrally therewith, so that the transmission of power from the input shaft 1 to the output shaft 2 is carried out between the third-speed drive gear 6a and the third-speed driven gear 6b. At this time, the third speed step is established. On the other hand, when the second synchromesh mechanism 12 operates to the fourth-speed drive gear 7a side, the fourth-speed drive gear 7a is linked to the input shaft 1 so as to rotate integrally therewith, so that the transmission of power from the input shaft 1 to the output shaft 2 is carried out between the fourth-speed drive gear 7a and the fourth-speed driven gear 7b. At this time, the fourth speed step is established.

The third synchromesh mechanism 13 is provided on the input shaft 1, adjacent to the fifth-speed drive gear 8a. When the third synchromesh mechanism 13 operates to the fifth-speed drive gear 8a side, the fifth-speed drive gear 8a is linked to the input shaft 1 so as to rotate integrally therewith, so that the transmission of power from the input shaft I to the output shaft 2 is carried out between the fifth-speed drive gear 8a and the fifth-speed driven gear 8b. At this time, the fifth speed step is established.

In this manner, during the forward travel of the vehicle, except for the time of shift/select action, the rotation drive force of the input shaft 1 is transmitted to the output shaft 2 via one of the speed change gear trains 4 to 8 that is selected by operation of one of the foregoing synchromesh mechanisms 11, 12 and 13.

On the other hand, the reverse gear train 10 includes a reverse drive gear 10a that is attached to the input shaft 1 so as to rotate integrally with the input shaft 1, a reverse driven gear 10b mounted on the output shaft 2 so as to rotate integrally therewith, and a reverse idler gear 10c (shown by a two-dot dashed line in FIG. 1) that is mounted on the reverse shaft 3 so as to be freely slidable relative to the reverse shaft 3. These gears 10a, 10b and 10c do not transmit power (are in an unmeshed state) during the forward travel of the vehicle. At the time of reverse travel, all the synchromesh mechanisms 11, 12 and 13 are set in a neutral state (in this embodiment, the case where the third synchromesh mechanism 13 is not in the fifth-speed step established state is also termed the neutral state), the reverse idler gear 10c is moved in the axis direction of the reverse shaft 3 so as to mesh with both the reverse drive gear 10a and the reverse driven gear 10b, so that power is transmitted to the reverse driven gear 10b while the direction of the rotation of the reverse drive gear 10a is reversed by the reverse idler gear 10c. Due to this, the output shaft 2 rotates in the direction opposite to the rotation direction caused by the forward speed steps, so that driving wheels rotate in the backward direction. Incidentally, the reverse driven gear 10b is disposed on an outer peripheral side of the first synchromesh mechanism 11 so as to rotate integrally with the first synchromesh mechanism 11.

The rotation drive force transmitted to the output shaft 2 while being changed in speed at a predetermined speed change ratio or reversed in rotation direction is transmitted to a differential device 16 after being reduced in speed at a final speed reduction ratio of a final reduction gear train 15 made up of a final drive gear 15a and a final driven gear 15b. Due to this, the driving wheels (not shown) are rotated in the forward travel direction or the reverse travel direction.

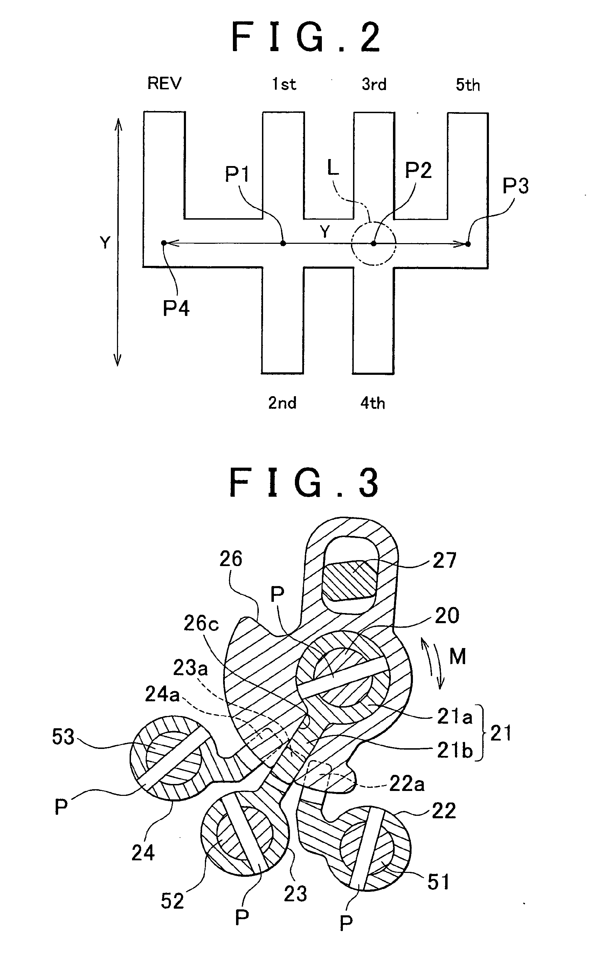

FIG. 2 schematically shows a shift pattern (the shape of a shift gate) of the five-speed manual transmission of this embodiment. This shift gate is constructed in a shape that allows a shift lever L indicated by a two-dot dashed line in FIG. 2 to perform select operation in the directions of arrows X in FIG. 2, and also to perform shift operation in the directions of arrows Y orthogonal to the directions of the select operation.

In the select operation directions, a first/second-speed select position P1, a third/fourth-speed select position P2, a fifth-speed select position P3, and a reverse (reverse travel) select position P4 are arranged in a line.

By a shift operation (operation in one of the directions of arrows Y) at the first/second-speed select position P1, the shift lever L can be moved to a first-speed position 1st or a second-speed position 2nd. In the case where the shift lever L is operated to the first-speed position 1st, the first synchromesh mechanism 11 operates to the first-speed driven gear 4b side, so that the first-speed driven gear 4b is linked to the output shaft 2 so as to rotate integrally therewith. In the case where the shift lever L is operated to the second-speed position 2nd, the first synchromesh mechanism 11 operates to the second-speed driven gear 5b side, so that the second-speed driven gear 5b is linked to the output shaft 2 so as to rotate integrally therewith.

Likewise, by a shift operation at the third/fourth-speed select position P2, the shift lever L can be moved to a third speed position 3rd or a fourth speed position 4th. In the case where the shift lever L is operated to the third speed position 3rd, the second synchromesh mechanism 12 operates to the third-speed drive gear 6a side, so that the third-speed drive gear 6a is linked to the input shaft 1 so as to rotate integrally therewith. In the case where the shift lever L is operated to the fourth speed position 4th, the second synchromesh mechanism 12 operates to the fourth-speed drive gear 7a side, so that the fourth-speed drive gear 7a is linked to the input shaft 1 so as to rotate integrally therewith.

Besides, by the shift operation (shift operation upward in FIG. 2) at the fifth-speed select position P3, the shift lever L can be moved to a fifth speed position 5th. In the case where the shift lever L is operated to the fifth speed position 5th, the third synchromesh mechanism 13 operates to the fifth-speed drive gear 8a side, so that the fifth-speed drive gear 8a is linked to the input shaft 1 so as to rotate integrally therewith.

Furthermore, by the shift operation at the reverse select position P4, the shift lever L can be moved to a reverse position REV. In the case where the shift lever L is operated to the reverse position REV, all the synchromesh mechanisms 11, 12 and 13 assume the neutral state, and the reverse idler gear 10c moves in the axis direction of the reverse shaft 3 to mesh with the reverse drive gear 10a and the reverse driven gear 10b.

Next described will be a select/shift mechanism (operation force-transmitting mechanism) for transmitting the operation force of the shift lever L selectively to one of the synchromesh mechanisms 11, 12 and 13 and the reverse idler gear 10c so as to establish a selected one of the first to fifth forward speed steps and the reverse speed step when the shift lever L is operated.

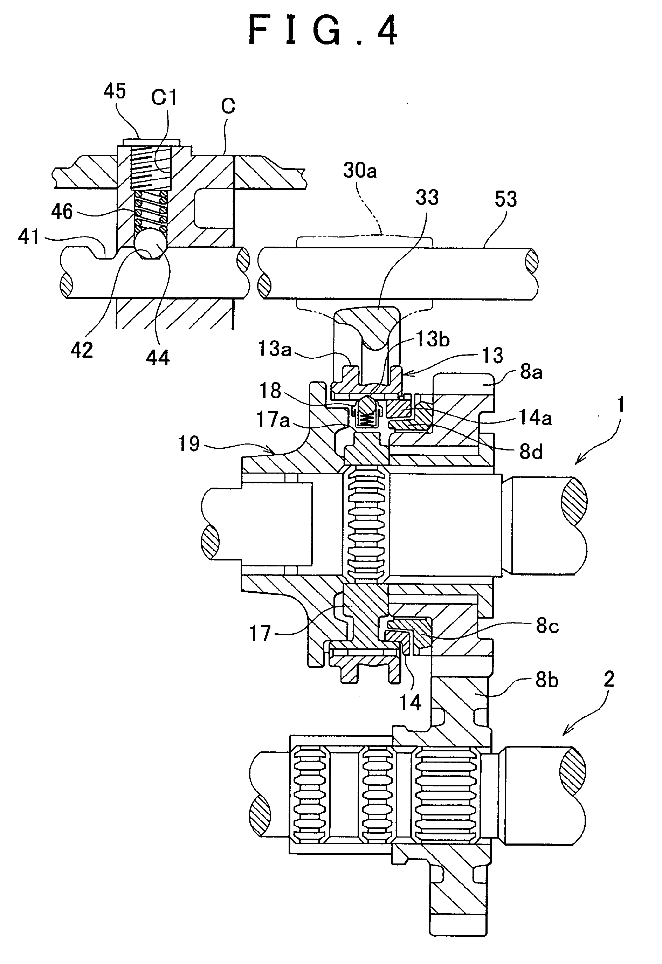

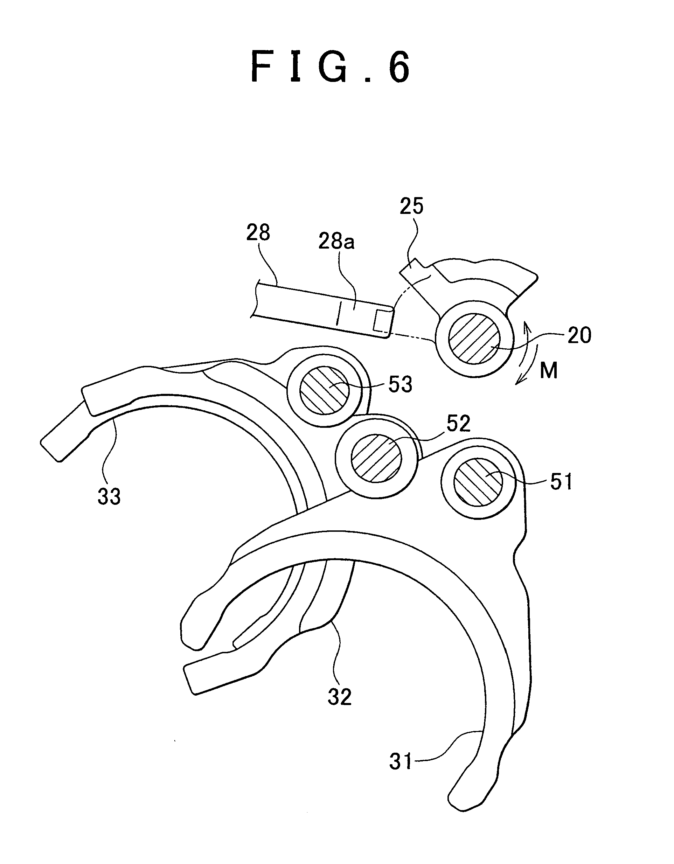

FIG. 3 is a sectional view of the forward speed step engagement portions 22, 23 and 24 and their peripheries in the select/shift mechanism, viewed in the axis direction of the shift/select shaft 20. Incidentally, in FIG. 3, reference numeral 22 denotes a forward speed step engagement portion for the first speed and the second speed that is provided on a first/second-speed fork shaft 51, and reference numeral 23 denotes a forward speed step engagement portion for the third speed and the fourth speed that is provided on a third/fourth-speed fork shaft 52, and reference numeral 24 denotes a forward speed step engagement portion for the fifth speed that is provided on a fifth-speed fork shaft 53. FIG. 4 is a sectional view showing engagement portions between the fifth-speed fork shaft 53 and the third synchromesh mechanism 13. FIG. 6 is a sectional view of shift forks 31, 32 and 33 that are provided on the fork shafts 51, 52 and 53, and their peripheries, viewed in the axis direction of the shift/select shaft 20.

As shown in these drawings, in the select/shift mechanism, the shift lever L is linked to the shift/select shaft 20 (see FIG. 3 and FIG. 6) via a select cable (not shown) and a shift cable (not shown) so that operation force can be transmitted to the shift/select shaft 20. Due to this arrangement, the shift/select shaft 20 is pivoted around the axis (in the directions shown by arrows M in FIG. 3 and FIG. 6) according to the select operation of the shift lever L, and is slid along the axis (in directions perpendicular to the plane of the sheet of each of FIG. 3 and FIG. 6) according to the shift operation of the shift lever L. Specifically, the select operation force on the shift lever L (operation force in either one of the directions shown by arrows X in FIG. 2) is transmitted to the shift/select shaft 20 as a pivot force around the axis of the shift/select shaft 20 via the select cable, and the shift operation force on the shift lever L (operation force in either one of the directions shown by the arrows Y in FIG. 2) is transmitted to the shift/select shaft 20 as a sliding force in one of the axis directions of the shift/select shaft 20 via the shift cable. Incidentally, reference numeral 27 in FIG. 3 denotes a select inner lever provided for receiving the select operation force of the shift lever L via the select cable and giving the pivot force around the axis to the shift/select shaft 20.

A sleeve 13a (see FIG. 4) provided in each one of the synchromesh mechanisms 11, 12 and 13 is engaged with a corresponding shift fork 33 (FIG. 4 shows only the fifth-speed shift fork 33 among the three shift forks 31, 32 and 33), and a proximal end portion of the shift fork 33 is supported by a corresponding forward-speed-step fork shaft 53 (FIG. 4 shows only the fifth-speed-step fork shaft 53 among the three fork shafts 51, 52, 53). By a pivot movement of the shift/select shaft 20 about its axis according to the select operation of the shift lever L, a fork shaft 53 (51, 52) is selected so as to be able to transmit the shift operation force. By a slide of the shift/select shaft 20 according to the shift operation of the shift lever L, the selected fork shaft 53 (51, 52) is slid along the axis to actuate the corresponding synchromesh mechanism 13 (11, 12) via the shift fork 33 (31, 32) provided on the fork shaft 53 (51, 52). Incidentally, since the manual transmission in accordance with the embodiment has five forward speed steps, only one side of the third synchromesh mechanism 13 is provided with a speed change gear (fifth-speed drive gear 8a) while both sides of the first synchromesh mechanism 11 and of the second synchromesh mechanism 12 are provided with a speed change gear (see FIG 1).

As shown in FIG. 3, the shift inner lever 21 for selecting the fork shaft 52 (51, 53) has a cylinder portion (base portion) 21a that is fitted and fixed to the outer periphery of the shift/select shaft 20, and an arm portion 21b that extends in a radial direction from the cylinder portion 21 a. Besides, an engagement pin P is inserted across the shift/select shaft 20 and the cylinder portion 21a, extending through an entire diameter thereof, whereby the shift inner lever 21 is linked to the shift/select shaft 20 so as to rotate integrally with the shift/select shaft 20 and slide integrally therewith.

An interlock plate (interlock member) 26 is fitted onto the cylinder portion 21a of the shift inner lever 21 so as to be slidable in the axis directions (along the axis) and pivotable about the axis relative to the cylinder portion 21a. In the interlock plate 26, an engagement piece passageway 26c defined by a pair of facing guide surfaces that slindingly contact two opposite sides of the arm portion 21b of the shift inner lever 21 in the pivoting directions is formed extending in the axis directions. The spacing between the two guide surfaces of the engagement piece passageway 26c is pre-set at a size that prevents simultaneous passage therethrough of two or more of the heads 22a, 23a, 24a that are engageable with the arm portion 21b of the shift inner lever 21 and are movable together therewith in the axis directions, that is, a size that permits only one head 23a (22a, 24a) to pass therethrough. Incidentally, while the interlock plate 26 is movable in the axis directions relative to the cylinder portion 21a of the shift inner lever 21 as described above, the interlock plate 26 is immovable in the axis directions relative to the transmission case.

Besides, when the shift lever L is operated in one of the select directions indicated by the arrows X in FIG. 2, the operation force thereof is transmitted to the shift/select shaft 20 by the select cable via the select inner lever 27, pivoting the shift/select shaft 20 to a pivot position that is commensurate with the operated position of the shift lever L. FIG. 3 shows the pivot positions of the shift/select shaft 20 and the shift inner lever 21 when the shift lever L is operated to the third/fourth-speed select position P2.

Besides, when the shift lever L is operated in one of the shift directions indicated by the arrows Y in FIG. 2, the operation force thereof is transmitted to the shift/select shaft 20 by the shift cable, sliding the shift/select shaft 20 in the corresponding axis direction (a direction orthogonal to the plane of the sheet of FIG. 3) to a slide position that is commensurate with the operated position of the shift lever L.

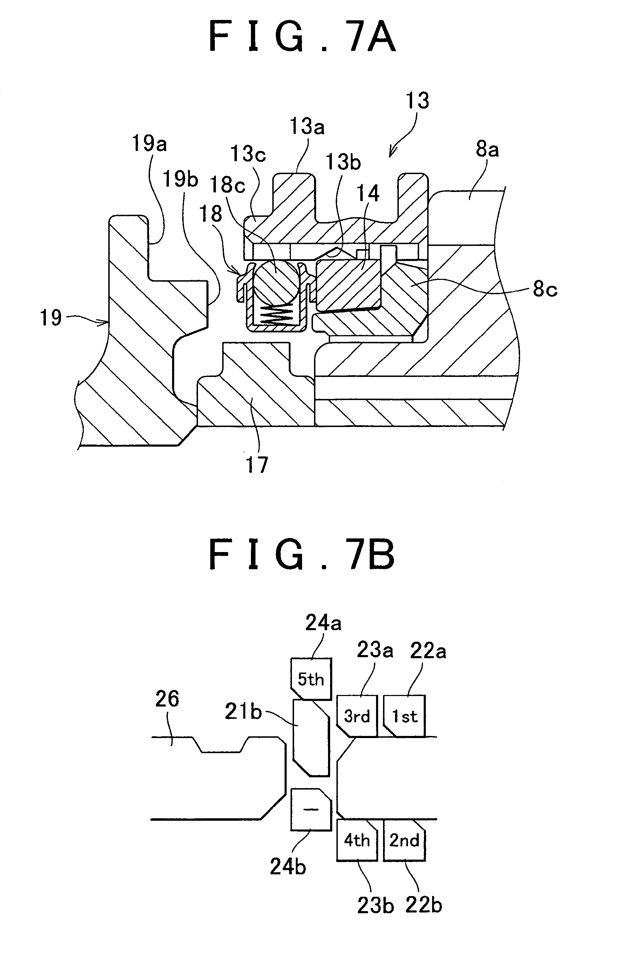

The forward-speed-step engagement portions 22, 23 and 24 each having a pair of heads (forward speed step engagement pieces) 22a and 22b; 23a and 23b; and 24a and 24b (see FIG. 7B) arranged on two opposite sides of a pivot path (a movement path in the select directions) of the arm portion 21b of the shift inner lever 21 that face in the axis directions are disposed on fork shafts 51, 52 and 53, respectively, which are arranged corresponding to the synchromesh mechanisms 11, 12 and 13 (FIG. 3 shows the first/second-speed fork shaft 51, the third/fourth-speed fork shaft 52, and the fifth-speed fork shaft 53, while FIG. 4 shows only the fifth-speed fork shaft 53). These heads 22a, 22b, 23a, 23b, 24a and 24b are an example of a shift fork head group termed in the invention.

Besides, each of the fork shafts 51, 52 and 53 and a corresponding one of the forward-speed-step engagement portions 22, 23 and 24 are linked to each other so as to integrally slide together, by an engagement pin P that is inserted across the forward-speed-step engagement portion and the fork shaft, extending through an entire diameter thereof.

Each of the heads 22a, 22b, 23a, 23b, 24a and 24b is disposed at such a position as to be selectively engageable with the arm portion 21b of the shift inner lever 21 according to the select operation. Each head is constructed so as to be engaged with and moved by the arm portion 21b in a direction along the axis of the shift/select shaft 20 when selected. The movement of each pair of heads 22a, 22b, 23a, 23b, 24a and 24b in a direction of the foregoing axis from the neutral position, that is, the movement of each of the forward-speed-step engagement portions 22, 23 and 24 that has a corresponding one of the pairs of heads 22a, 22b, 23a, 23b, 24a and 24b in a direction of the foregoing axis from the neutral position, is associated with the operation of the synchromesh mechanisms 11, 12 and 13, and with the subsequent execution of the speed shift action to a forward speed step.

As for the foregoing heads, reference character 22a denotes a first-speed-step head, and 22b denotes a second-speed-step head, and 23a denotes a third-speed-step head, and 23b denotes a fourth-speed-step head, and 24a denotes a fifth-speed-step head, and 24b denotes a fifth-speed-step-disengaging head (a head with which the arm portion 21b of the shift inner lever 21 engages at the time of the shift from the fifth-speed-step position to the neutral position).

Furthermore, as shown in FIG. 6, a reverse lever 25 is provided on the shift/select shaft 20 so as to rotate integrally with the shift/select shaft 20 and slide integrally therewith. Besides, a reverse arm (reverse speed step-shifting member) 28 having a reverse head 28a is disposed adjacent to the locus of pivot of the reverse lever 25 that is formed when the shift/select shaft 20 pivots. A distal end portion of the reverse arm 28 that is at a side thereof that is remote from the reverse head 28a is engaged with the reverse idler gear 10c. Therefore, in the case where the shift lever L is operated to the reverse select position P4 in FIG. 2, the reverse lever 25 is pivoted to such a position as to face the reverse head 28a (see an imaginary line in FIG. 6). If the shift lever L is shifted from this state to the reverse position REV, for example, the reverse lever 25 is moved to a far side in a direction perpendicular to the plane of the sheet of FIG. 6, so that the reverse lever 25 comes into contact with the reverse head 28a, moving the reverse arm 28 in a direction along the axis of the shift/select shaft 20 (termed the shift direction of the reverse speed step), whereby the reverse idler gear 10c moves in the axis direction of the reverse shaft 3 to engage with the reverse drive gear 10a and with the reverse driven gear 10b.

During the state in which the shift lever L is at the neutral position (the third/fourth-speed select position P2 in this embodiment) and none of the speed change steps has been established, the arm portion 21b of the shift inner lever 21 is also at a neutral position in the axis directions and also in the pivot directions, and the heads 22a, 22b, 23a, 23b, 24a and 24b are disposed on both sides of the pivot path of the arm portion 21b.

Then, according to the select operation of the shift lever L, the arm portion 21b of the shift inner lever 21 pivots interlocked with the shift/select shaft 20, so that the arm portion 21b is selectively positioned at such a position that the arm portion 21b can engage with one or two of the heads 22a, 22b, 23a, 23b, 24a and 24b that are disposed at a pivot position commensurate with the select position of the shift lever L. For example, in the case where the shift lever L is operated to the first/second-speed select position P1, the arm portion 21b of the shift inner lever 21 is positioned so as to be engageable with the heads 22a, 22b of the first/second-forward-speed-step engagement portion 22 provided on the first/second-speed fork shaft 51. In the case where the shift lever L is operated to the third/fourth-speed select position P2, the arm portion 21b of the shift inner lever 21 is positioned so as to be engageable with the heads 23a, 23b of the third/fourth-forward-speed-step engagement portion 23 provided on the third/fourth-speed fork shaft 52. In the case where the shift lever L is operated to the fifth-speed select position P3, the arm portion 21b of the shift inner lever 21 is positioned so as to be engageable with the head 24a of the fifth-forward-speed-step engagement portion 24 provided on the fifth-speed fork shaft 53. Besides, in the case where the shift lever L is operated to the reverse select position P4, the shift/select shaft 20 pivots counterclockwise in FIG. 6 so that the reverse lever 25 is disposed so as to be engageable with the reverse head 28a of the reverse arm 28.

Thus, as the arm portion 21b of the shift inner lever 21 is positioned so as to be engageable with one or two of the forward-speed-step heads 22a, 22b, 23a, 23b, 24a and 24b, one fork shaft 52 (51, 53) is selected to be made able to transmit operation force. Or, the reverse lever 25 is positioned so as to be engageable with the reverse head 28a of the reverse arm 28.

When the shift lever L is operated in one of the shift directions from the foregoing state, the operation force of the shift lever L is transmitted to the shift/select shaft 20 by the shift cable. Therefore, the shift/select shaft 20 is slid in one of the axis directions thereof. In the case where the arm portion 21b of the shift inner lever 21 is engaged with one of the heads 22a, 22b, 23a, 23b, 24a and 24b (provided for the forward speed steps), the sliding of the shift/select shaft 20 slides the head 22a, 22b, 23a, 23b, 24a or 24b engaged with the arm portion 21b, and therefore slides one of the forward-speed-step engagement portions 22, 23 and 24 that is provided with the head 22a, 22b, 23a, 23b, 24a or 24b, and the fork shaft 51, 52 or 53 that is interlocked with that head. As a result, a corresponding one of the synchromesh mechanisms 11, 12 and 13 operates.

In the case where the reverse lever 25 is engaged with the reverse head 28a, sliding the reverse arm 28 together with the reverse head 28a in one of the axis directions causes the reverse arm 28 to move the reverse idler gear 10c in the axis direction of the reverse shaft 3.

For example, in the case where the shift lever L is operated in the shift direction to the third speed position 3rd from a state in which the arm portion 21b of the shift inner lever 21 is disposed engageable with the heads 23a and 23b of the forward-speed-step engagement portion 23 provided on the third/fourth-speed fork shaft 52 as shown in FIG. 3, the shift/select shaft 20 moves to a remote side in the direction perpendicular to the plane of the sheet of FIG. 3. Along with this movement, the arm portion 21b, the forward-speed-step engagement portion 23, the third/fourth-speed fork shaft 52, and the third/fourth-speed shift fork 32 also move in the same direction, so that the second synchromesh mechanism 12 operates to the third-speed drive gear 6a side, establishing the third speed step. In the case where shift lever L is operated in the shift direction to the fourth speed position 4th from the state shown in FIG. 3, the shift/select shaft 20 moves to a near side in the direction perpendicular to the plane of the sheet of FIG. 3. Along with this movement, the arm portion 21b, the forward-speed-step engagement portion 23, the third/fourth-speed fork shaft 52, and the third/fourth-speed shift fork 32 also move in the same direction, so that the second synchromesh mechanism 12 operates to the fourth-speed drive gear 7a side, establishing the fourth speed step.

FIG. 4 is a sectional view showing engagement portions between the fifth-speed fork shaft 53 and the third synchromesh mechanism 13. As shown in FIG 4, the shift fork 33 is attached to the fork shaft 53 via a link portion 30a shown by a two-dot dashed line, and a distal end portion of the shift fork 33 is engaged with a sleeve 13a of the third synchromesh mechanism 13.

Two lock ball groves 41 and 42 corresponding to the fifth speed step and the neutral position are formed on the fifth-speed fork shaft 53. A lock ball 44 pressurized to the fork shaft 53 side selectively fits into one of the lock ball groves 41 and 42. The lock ball 44 is housed within a hole C1 that is formed in the transmission case C. The lock ball 44 is pressurized to the fork shaft 53 side by a compressed coil spring 46 stopped by a plug 45 that is also housed in the hole C1. This construction prevents gear slip-out, and provides crisp shift feel.

When one of the fork shafts 51, 52 and 53 (e.g., the fifth-speed fork shaft 53 as in FIG. 4) provided with the forward-speed-step engagement portions 22, 23 and 24, respectively, is slightly moved in the axis direction from the neutral position, the fork shaft 53 and the forward-speed-step engagement portion 24 fixed to the fork shaft 53 receive a neutral position return force that urges the fork shaft 53 and the engagement portion 24 to return to the neutral position due to the pressing of the lock ball 44 to the lock ball groove 42 side, as long as the lock ball 44 does not completely come out of the lock ball groove 42.

The engagement portions between the first/second-speed fork shaft 51 and the first synchromesh mechanism 11, and the engagement portions between the third/fourth-speed fork shaft 52 and the second synchromesh mechanism 12 have substantially the same construction as described above. However, as for each of the first synchromesh mechanism 11 and the second synchromesh mechanism 12, since speed change gears are provided on both sides of the synchromesh mechanism 11, 12, the fork shaft 51, 52 is able to slide to either side from the neutral position (either side in the axis direction), and therefore three lock ball grooves are formed.

Next, the synchromesh mechanisms will be concretely described. The following description will be made with reference to the third synchromesh mechanism 13 for the fifth speed step, as an example, which has features of this embodiment.

As shown in FIG. 4, a clutch hub 17 (also called synchronizer hub) is attached to the input shaft 1. The clutch hub 17 is spline-fitted to an outer peripheral surface of the input shaft 1 so as to rotate together with the input shaft 1. The method of fixing the clutch hub 17 to the input shaft 1 is not limited to spline fitting, but may also be other methods.

A gear piece 8c is spline-fitted to the fifth-speed drive gear 8a so that the gear piece 8c and the fifth-speed drive gear 8a integrally rotate. The gear piece 8c is not engaged with the clutch hub 17 in a state shown in FIG. 4. Therefore, when the third synchromesh mechanism 13 is not operating, the gear piece 8c is rotatable relative to the clutch hub 17.

The gear piece 8c is provided with a conical portion 8d that has a taper surface that is tilted to the axis of the input shaft 1, as an outer peripheral surface. Then, a synchronizer ring 14 is fitted to the outer periphery side of the conical portion 8d. The synchronizer ring 14 is a member for synchronizing the rotation of the gear piece 8c and the rotation of the clutch hub 17, and includes a conical portion 14a that has, as an inner peripheral surface, a taper surface that faces the conical portion 8d of the gear piece 8c. The conical portion 14a of the synchronizer ring 14 contacts the conical portion 8d of the gear piece 8c, whereby synchronized rotation of the two conical portions is carried out.

The sleeve 13a is spline-fitted to the outer periphery side of the clutch hub 17. Therefore, the sleeve 13a is mounted on the input shaft 1 via the clutch hub 17 so as to rotate integrally with the input shaft 1, and is slidable in the directions along the axis of the input shaft 1. That is, the clutch hub 17 holds the sleeve 13a slidably in the directions along the axis of the input shaft 1.

Beside, shifting keys 18 are disposed at a plurality of locations equiangular (three locations in this embodiment) in the circumferential direction, on an inner peripheral side of the sleeve 13a. The number of shifting keys 18 is not limited to the foregoing number. The shifting keys 18 are housed within recessed portions 17a that are formed in an outer peripheral portion of the clutch hub 17, and is slidable in the axis directions (the left or right direction in FIG 4).

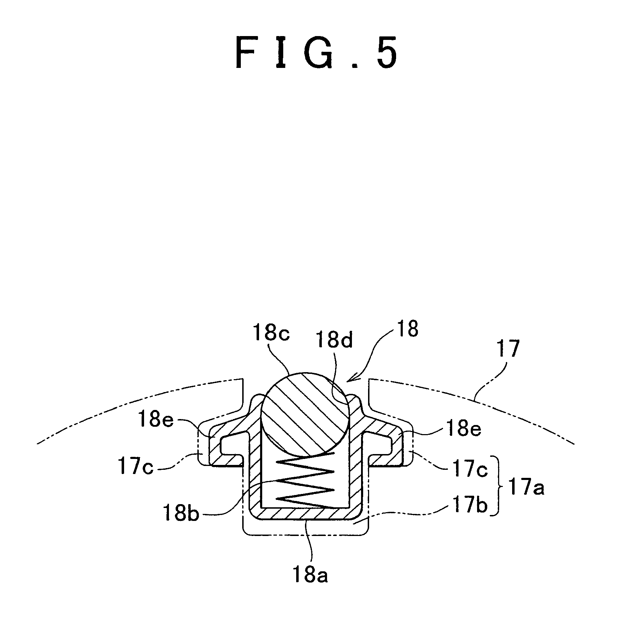

Hereinafter, the construction of the shifting key 18 will be described. FIG. 5 is a sectional view of a site where a shifting key 18 is disposed, viewed in a direction along the axis of the input shaft 1 (in which the clutch hub 17 is shown by an imaginary line). As shown in FIG. 5, each recessed portion 17a formed in the clutch hub 17 has a main recessed portion 17b for housing a casing 18a of the shifting key 18, and subsidiary recessed portions 17c, 17c that are continuous to the main recessed portion 17b and that are recessed to opposite sides of the clutch hub 17 in the circumferential direction. On the other hand, the shifting key 18 includes the casing 18a formed by pressing a metal plate, a coil spring (urging member) 18b housed in a compressed state within the casing 18a, and a lock ball (latch member) 18c that receives force from the coil spring 18b. An upper end portion of the casing 18a which faces the inner peripheral surface of the sleeve 13a has an opening 18d whose diameter is set smaller than the outside diameter of the lock ball. Then, since the lock ball 18c housed in the casing 18a receives force from the coil spring 18b (upward force therefrom in FIG. 5), a portion (upper portion) of the lock ball 18c is slightly protruded from the opening 18d when there is no external force (pressing force from the sleeve 13a) acting on the lock ball 18c. Besides, the casing 18a includes a pair of left and right arm portions 18e and 18e that extend into the subsidiary recessed portions 17c, 17c. The arm portions 18e, 18e contact bottom surfaces of the subsidiary recessed portions 17c, 17c, whereby the position of the shifting key 18 within the recessed portion 17a is defined (defined in the circumferential direction of the clutch hub 17). The shifting keys 18 are slidable in the directions orthogonal to the plane of the sheet of FIG. 5 (directions along the center axis of the clutch hub 17). In the speed shift action described below, the shifting keys 18 slide together with the sleeve 13a.

A groove (recessed portion) 13b into which the lock balls 18c are fittable is formed in a substantially middle portion of the inner surface of the sleeve 13a (inner end edges of the splines of the sleeve 13a) that is substantially middle in the sliding directions (see FIG. 7A). While the operation force (operation force in a shift direction) of the shift fork 33 does not act on the sleeve 13a, the sleeve 13a is at a netural position (position at which the fifth speed step is not established), and the lock balls 18c are fitted in the groove 13b that is formed in the inner surface of the sleeve 13a (as shown in FIG. 4). Thus, the shifting keys 18 and the groove 13b formed in the sleeve 13a construct sleeve movement restriction means termed in the invention.

Due to the foregoing constructions, in the shift action to the fifth speed step, the sleeve 13a, receiving the operation force from the shift fork 33, approaches the fifth-speed drive gear 8a side, and the shifting keys 18 push the synchronizer ring 14 to the gear piece 8c side. Therefore, the conical portion 14a of the synchronizer ring 14 comes into sliding contact with the conical portion 8d of the gear piece 8c. Then, due to the friction force between the two conical portions, that is, the relative torque, the synchronizer ring 14 and the fifth-speed drive gear 8a gradually come to synchronously rotate.

Then, when the shift operation force is applied to the sleeve 13a, the internal teeth of the sleeve 13a come to mesh with the external teeth of the synchronizer ring 14 and the external teeth of the gear piece 8c in that order. Due to this, the rotation of the clutch hub 17 is transmitted to the gear piece 8c and the fifth-speed drive gear 8a via the sleeve 13a. In this state, the fifth-speed drive gear 8a rotates together with the input shaft 1, thus completing the shift action to the fifth speed step.

Incidentally, the engagement portions between the first/second-speed fork shaft 51 and the first synchromesh mechanism 11, and the engagement portions between the third/fourth-speed fork shaft 52 and the second synchromesh mechanism 12 have substantially the same construction as described above. However, as for each of the first synchromesh mechanism 11 and the second synchromesh mechanism 12, speed change gears are provided on both side of the synchromesh mechanism, and therefore a predetermined speed change step is established according to the sliding direction of the synchromesh mechanism.

In the manual transmission in accordance with this embodiment, the third synchromesh mechanism 13 synchronizes the fifth-speed drive gear 8a. Hence, no speed change gear is provided on the side of the third synchromesh mechanism 13 that is opposite the fifth-speed drive gear 8a (the left side of the third synchromesh mechanism 13 in FIG. 4). Therefore, for the purpose of preventing the sleeve 13a from falling apart to the side opposite the fifth-speed drive gear 8a side, a stopper 19 is mounted on the input shaft 1. The stopper 19 is disposed on the input shaft 1 so as to rotate integrally therewith at the disengagement-shift-direction side of the sleeve 13a, that is, at the side of the sleeve 13a in the direction (the leftward direction in FIG. 4) in which the sleeve 13a moves when the shift operation from the fifth-speed-step position toward the neutral position is performed. Besides, as shown in FIG. 7A, the stopper 19 has a sleeve contact portion 19a that faces the sleeve 13a, and a shifting key contact portion 19b located radially inwardly of the sleeve contact portion 19a. The position of the shifting key contact portion 19b is set to the fifth-speed drive gear 8a side from the position of the sleeve contact portion 19a (at the right-hand-side of the sleeve contact portion 19a in FIG. 7A).

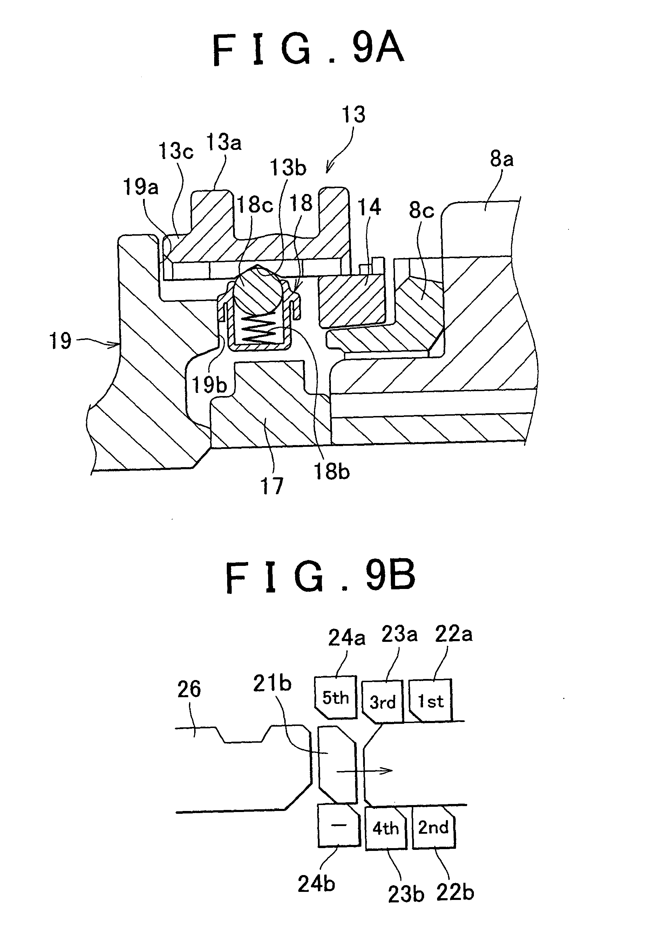

More specifically, the position of the shifting key contact portion 19b is set so that during the state in which the sleeve 13a is at the neutral position (the state shown in FIG. 4), the interval between the shifting keys 18 and the shifting key contact portion 19b is smaller than the interval between the sleeve 13a and the sleeve contact portion 19a. That is, as shown in FIG. 9A, the two intervals are set so that during the state in which the sleeve 13a and the shifting keys 18 are engaged (so that the lock balls 18c are fitted into the groove 13b), the sleeve 13a does not contact the sleeve contact portion 19a although the shifting keys 18 contact the shifting key contact portion 19b.

In this embodiment, positional setting is made such that the sliding position of the sleeve 13a (the sliding position shown in FIG. 9A) is substantially the neutral position of the sleeve 13a in the sliding directions during the state in which the sleeve 13a is in engagement with the shifting keys 18 so that the lock balls 18c are fitted in the groove 13, and in which the shifting keys 18 are in contact with the shifting key contact portion 19b of the stopper 19. That is, during that state, the fifth-speed-step head 24a and the fifth-speed-step-disengaging head 24b with which the arm portion 21b of the shift inner lever 21 is engaged are held at the substantially neutral position in the shift direction. In other words, as shown in FIG. 9B, the foregoing setting is made so that the position of the arm portion 21b of the shift inner lever 21 is restrained while the position of the fifth-speed-step head 24a and the fifth-speed-step-disengaging head 24b in the shift directions is substantially the same as the position of the other heads 22a, 22b, 23a and 23b in the shift directions.

Besides, the sleeve 13a is provided with a contact protrusion 13c that extends in a horizontal direction corresponding to the sleeve contact portion 19a of the stopper 19.

Net, actions at the time of a downshift from the fifth speed step to the fourth speed step, which are features of this embodiment, will be described.

FIG. 7A shows a state of the third synchromesh mechanism 13 during the fifth-speed-step established state. Besides, FIG. 7B is a developed drawing showing positions of the heads 22a, 22b, 23a, 23b, 24a and 24b, the arm portion 21b of the shift inner lever 21, and the interlock plate 26 during the fifth-speed-step established state.

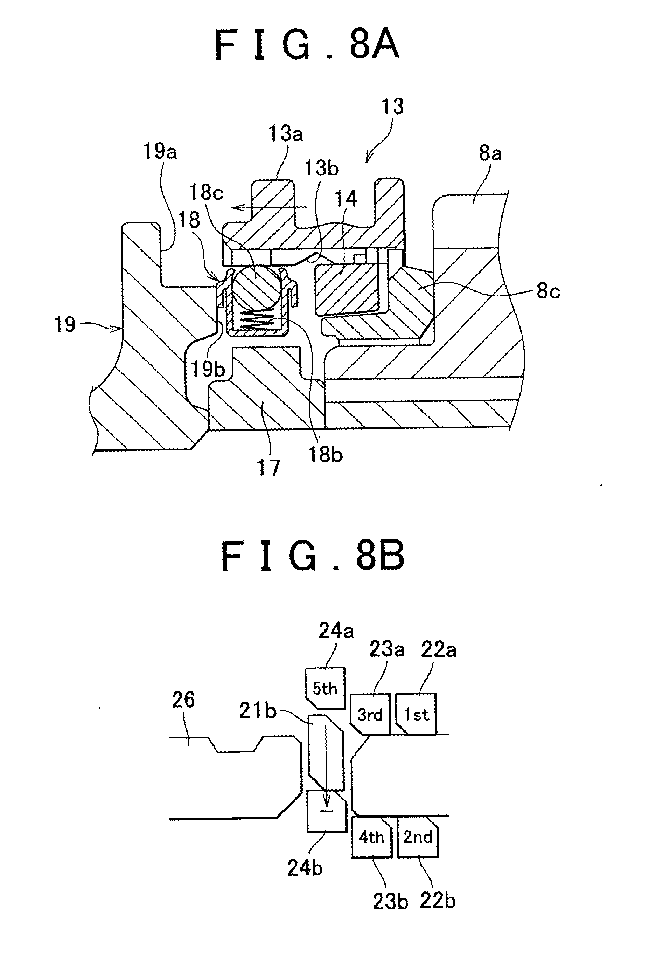

When in order to perform a downshift from the state shown in FIGS. 7A and 7B to the fourth speed step, a driver operates the shift lever L in the shift direction from the fifth-speed-step position toward the neutral position (in the Y direction in FIG. 2), then the fifth-speed-step head 24a and the fifth-speed-step-disengaging head 24b receive the operation force acting in the disengagement shift direction from the shift/select shaft 20 and the arm portion 21b of the shift inner lever 21, and therefore move toward the neutral position in the shift direction. Along with this movement, the sleeve 13a and the shifting keys 18 also move toward the neutral position, that is, toward the stopper 19. Then, when the sleeve 13a and the shifting keys 18 move in this manner, the shifting keys 18 come into contact with the shifting key contact portion 19b of the stopper 19 while the sleeve 13a has not contacted the sleeve contact portion 19a of the stopper 19 as shown in FIG. 8A. Due to this contact, the movement of the shifting keys 18 is stopped. In this state, the lock balls 18c of the shifting keys 18 are still located apart from the groove 13b of the sleeve 13a, and therefore the sleeve 13a is not subjected to the movement restraint caused by the lock balls 18c. That is, while the shifting keys 18 are restrained in movement by their contact with the stopper 19, the sleeve 13a continues moving toward the stopper 19, and thus the disengagement shift action continues (see an arrow indicating the moving direction in FIG. 8A). FIG. 8B shows the positions of the heads 22a, 22b, 23a, 23b, 24a and 24b, the position of the arm portion 21b of the shift inner lever 21, and the position of the interlock plate 26, in the situation shown in FIG. 8A. Besides, in FIG. 8B, the disengagement shift direction of the arm portion 21b, the fifth-speed-step head 24a and the fifth-speed-step-disengaging head 24b is shown by an arrow.

Then, at the time point when the sleeve 13a reaches a substantially neutral position as shown in FIG. 9A after moving in the disengagement shift direction from the state shown in FIG. 8A, the sleeve 13a has not contacted the sleeve contact portion 19a of the stopper 19, and the position of the groove 13b of the sleeve 13a coincides with the position of the lock balls 18c of the shifting keys 18, so that the lock balls 18c, receiving force from the coil springs 18b, fit into the groove 13b. Due to this fitting, the movement of the sleeve 13a is restrained at the substantially neutral position in an intermediate portion of the movement in the disengagement shift direction. That is, the sliding of the sleeve 13a is restrained at the substantially neutral position before the sleeve 13a contacts the stopper 19. During this state, as shown in FIG. 9B, the shift-direction positions (positions in the shift directions) of the fifth-speed-step head 24a and the fifth-speed-step-disengaging head 24b engaged with the arm portion 21b of the shift inner lever 21 are held at the substantially neutral position. In other words, the position of the arm portion 21b of the shift inner lever 21 is restrained in the state where the position of the fifth-speed-step head 24a and the fifth-speed-step-disengaging head 24b in the shift directions substantially coincides with the position of the other heads 22a, 22b, 23a and 23b in the shift directions. That is, the arm portion 21b is able to be positioned at the center of the select-direction movement path between the heads, so that the arm portion 21b can be moved through the select-direction movement path (can be moved in the select directions) without intervention with any of the heads 22a, 22b, 23a, 23b, 24a and 24b. This construction is able to avoid situations in which, at the time of switch from the disengagement shift operation to a select operation, the arm portion 21b of the shift inner lever 21 is caught on the fourth-speed-step head 23b, or the interlock plate 26 is caught on the fifth-speed-step head 24a (a situation shown in FIG. 13B). Thus, the construction ensures smooth operation at the time of transition from the disengagement shift operation to the select operation. In this manner, good operability is secured.

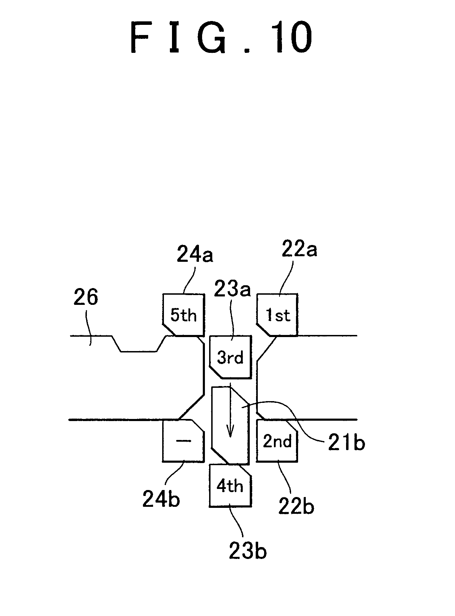

FIG. 10 is a diagram showing the positions of the heads 22a, 22b, 23a, 23b, 24a and 24b, the position of the arm portion 21b of the shift inner lever 21, and the position of the interlock plate 26 in a state where the fourth speed step is established by operating the shift lever to the fourth speed step position after the disengagement shift operation and the select operation.

Besides, according to the construction of the embodiment, the elastic force from the shifting keys 18 (the elastic force of the coil springs 18b) provides a holding force that holds the sleeve 13a at a substantially neutral position. Therefore, when the shift operation to the fifth speed step is performed from this state, the shift operation can easily be performed merely by exerting a shift operation force that overcomes the elastic force from the shifting keys 18. Thus, there is not need for large shift operation force.

The operation and effects as described above can be obtained not only at the time of the foregoing diagonal operation in which a downshift from the fifth speed step to the fourth speed step is performed, but also in the speed shift operations in which a downshift from the fifth speed step to the second speed step is performed, or a downshift from the fifth speed step to the third speed step is performed (so-called skip speed shift operation).

In the foregoing embodiment, the invention is applied to a manual transmission that is mounted in an FF vehicle. However, the invention is not limited so, but is also applicable to manual transmissions that are mounted in other types of vehicles such as FR (front engine, rear wheel drive) vehicles, etc. Besides, the invention is also applicable to a transmission which is equipped with actuators that operate in association with the driver's shift/select operation and which carries out speed shift actions using the actuators (so-called AMT or automatic manual transmission).

There is no need for perfect correspondence between the state in which the lock balls 18c of the shifting keys 18 are fitted in the groove 13b of the sleeve 13a with the shifting keys 18 being in contact with the shifting key contact portion 19b of the stopper 19 (the state show in FIG. 9A) and the state in which the fifth-speed-step head 24a and the fifth-speed-step-disengaging head 24b are at the same position in the shift directions as the other heads 22a, 22b, 23a and 23b (the state shown in FIG. 9B). That is, in the invention, it suffices to realize a position of the heads 22a, 22b, 23a, 23b, 24a and 24b and a position of the arm portion 21b of the shift inner lever 21 that do not bring about a situation in which in a subsequent select operation, the arm portion 21b of the shift inner lever 21 is caught on the fourth-speed-step head 23b, or the interlock plate 26 is caught on the fifth-speed-step head 24a.

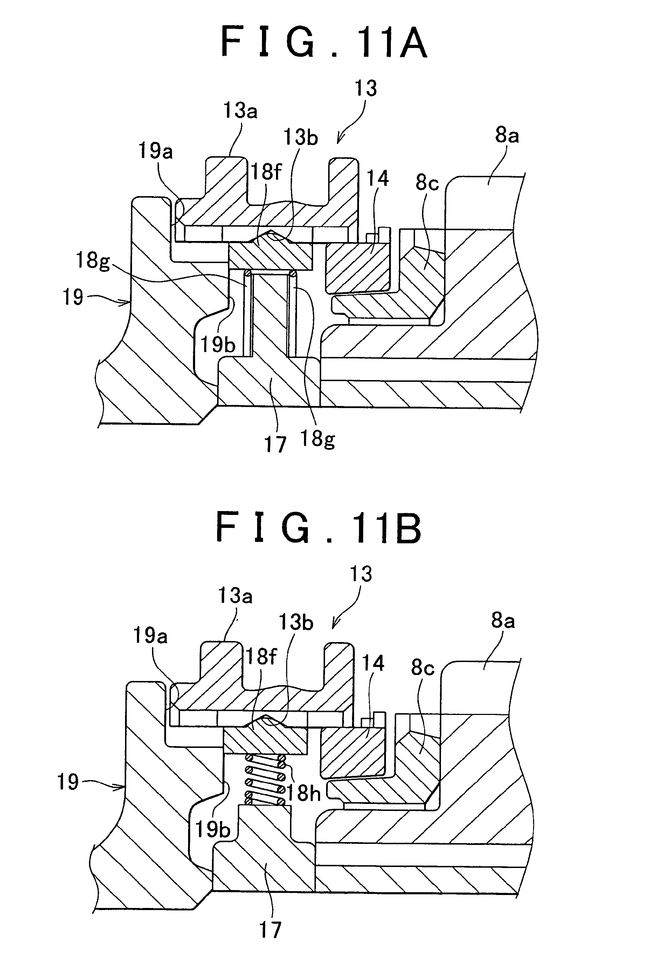

In the foregoing embodiment, each shifting key 18 includes the lock ball 18c that is urged by the coil spring 18b. However, the invention is not limited so. For example, a construction as shown in FIG. 11A may also be adopted in which a plurality of platy keys 18f (e.g., three keys 18f) are arranged equiangularly in the circumferential direction, and a pair of annular or circular springs 18g, 18g are arranged on an inner peripheral side of the platy keys 18f (i.e., are arranged so as to surround an outer peripheral side of the clutch hub 17) so as to urge the keys 18f toward the inner peripheral surface of the sleeve 13a. Or, a construction as shown in FIG. 11B may also be adopted in which a plurality of platy keys 18f (e.g., three keys 18f) are arranged equiangularly in the circumferential direction, and coil springs 18h are interposed between the inner peripheral surfaces of the platy keys 18f and the outer peripheral surface of the clutch hub 17 so as to urge the keys 18f toward the inner peripheral surface of the sleeve 13a. Incidentally, FIG. 11A and FIG. 11B both show the positions of the sleeve 13a and the shifting keys 18 when the operation of disengagement from the fifth speed step is completed (both the drawings correspond to the drawing in FIG. 9A).

## Claims

1. A manual transmission that includes: a rotation shaft (1) that transmits rotation drive force from a drive source; a clutch hub (17) provided on the rotation shaft (1) so as to rotate integrally with the rotation shaft (1); a sleeve (13a) that is engaged with an outer peripheral side of the clutch hub (17) so as to rotate integrally with the clutch hub (17), and that, due to a shift operation force from a shift lever (L), is adapted to move in a shift direction along an axis of the rotation shaft (1) from a neutral position where the sleeve (13a) does not receive the shift operation force so as to cause the rotation shaft (1) and a speed change gear to synchronously rotate; a stopper (19) that is adapted to restrict a movement range of the sleeve (13a) when the sleeve (13a) moves in a disengagement shift direction along the axis of the rotation shaft (1) due to a disengagement shift operation force from the shift lever (L); and sleeve movement restriction means (13a, 18) for giving to the sleeve (13a) a holding force for holding the sleeve (13a) at a substantially neutral position by restricting movement of the sleeve (13a) moving to a side of the stopper (19) when the sleeve (13a) reaches the substantially neutral position as the sleeve (13a) moves to the stopper (19) side due to the disengagement shift operation force;
wherein the sleeve movement restriction means (13a, 18) comprises a shifting key (18) that is adapted to move in the shift direction when the sleeve (13a) is moved in the shift direction due to the shift operation force; and wherein
when the sleeve (13a) is moved to the stopper (19) side due to the disengagement shift operation force, the shifting key is adapted to move to the stopper (19) side, and
when positioned in contact with the stopper (19), is adapted to give the holding force to the sleeve (13a) when the sleeve (13a) reaches the substantially neutral position;
**characterised in that** the shifting key (18) is adapted to contact the stopper (19) before the sleeve (13a) contacts the stopper when the sleeve (13a) is moved to the stopper (19) side due to the disengagement shift operaton force.

2. The manual transmission according to claim 1, **characterized in that**:
the operation force from the shift lever (L) is transmitted to the sleeve (13a) via an operation force-transmitting mechanism;
the operation force-transmitting mechanism comprises: a shift inner lever (21) that includes an arm portion (21b) that is movable in a select direction due to a select operation force from the shift lever (L); a shift fork head group in which a plurality of pairs of shift fork heads (22a, 22b; 23a, 23b; 24a, 24b), each pair of shift fork heads being disposed facing each other across a select-direction movement path of the arm portion (21b), are disposed along the select-direction movement path of the arm portion (21b), and in which one of the pairs of the shift fork heads (22a, 22b; 23a, 23b; 24a, 24b) selectively become engageable with the arm portion (21b) as the arm portion (21b) moves along the select-direction movement path; and fork shafts (51, 52, 53) each of which moves if a corresponding pair of shift fork heads (22a, 22b; 23a, 23b; 24a, 24b) are moved in the shift direction from a neutral position by the arm portion (21b) of the shift inner lever (21) moving in the shift direction due to the shift operation force received from the shift lever (L) when the arm portion (21b) is selectively engageable with the corresponding pair of shift fork heads (22a, 22b; 23a, 23b; 24a, 24b); and
when the sleeve (13a) is held at the substantially neutral position by the sleeve movement restriction means (13a, 18), the arm portion (21b) of the shift inner lever (21) is adapted to hold a pair of shift fork heads (24a, 24b) engaged with the arm portion (21b), at a substantially neutral position in the shift direction which substantially coincides with the position of other shift fork heads (22a, 22b; 23a, 23b) in the shift direction.

3. The manual transmission according to claim 1, **characterized in that** when the sleeve (13a) is at the neutral position, an interval between the shifting key (18) and a contact portion of the stopper (19) which the shifting key (18) contacts is shorter than an interval between the sleeve (13a) and a contact portion of the stopper (19) which the sleeve (13a) contacts.

4. The manual transmission according to claim 1 or 3, **characterized in that**:
the shifting key (18) comprises an urging member (18b, 18g, 18h) that is adapted to give an urging force toward an inner surface of the sleeve (13a), and a latch member (18c, 18f) that receives the urging force of the urging member (18b, 18g, 18h);
a recessed portion (13b) with which the latch member (18c, 18f) is able to engage is formed in the inner surface of the sleeve (13a); and
when the sleeve (13a) reaches the substantially neutral position with the shifting key (18) being in contact with the stopper (19) as the sleeve (13a) is moved to the stopper (19) side due to the disengagement shift operation force from the shift lever (L), the latch member (18c, 18f) fits into the recessed portion (13b) of the sleeve (13a) due to the urging force of the urging member (18b, 18g, 18h), and therefore holds the sleeve (13a) at the substantially neutral position.

5. The manual transmission according to claim 4, **characterized in that**
the shifting key (18) is disposed at each of a plurality of sites that are arranged equiangularly in the circumferential direction, at the inner peripheral side of the sleeve (13a).

6. The manual transmission according to claim 4, **characterized in that**
the urging member (18b, 18g, 18h) is a coil spring or a circular spring.

7. The manual transmission according to claim 4, **characterized in that**
the latch member (18c, 18f) is a lock ball or a platy key.

## Patentansprüche

1. Ein Schaltgetriebe, das aufweist: eine Rotationswelle (1), die eine Rotationsantriebskraft von einer Antriebsquelle überträgt, eine Kupplungsnabe (17), die an der Rotationswelle (1) vorgesehen ist, um sich mit der Rotationswelle (1) einstückig zu drehen, eine Hülse (13a), die mit einer Außenumfangsseite der Kupplungsnabe (17) in Eingriff steht, um sich mit der Kupplungsnabe (17) einstückig zu drehen, und die aufgrund einer Schaltbetätigungskraft von einem Schalthebel (L) angepasst ist, sich in eine Schaltrichtung entlang einer Achse der Rotationswelle (1) von einer neutralen Position zu bewegen, wo die Hülse (13a) die Schaltbetätigungskraft nicht aufnimmt, um zu bewirken, dass sich die Rotationswelle (1) und ein Gangschaltzahnrad synchron drehen, eine Stoppeinrichtung (19), die angepasst ist, einen Bewegungsbereich der Hülse (13a) zu beschränken, wenn sich die Hülse (13a) aufgrund einer Außereingriffsschaltbetätigungskraft von dem Schalthebel (L) in eine Außereingriffschaltrichtung entlang der Achse der Rotationswelle (1) bewegt, und eine Hülsenbewegungsbeschränkungseinrichtung (13a, 18), um auf die Hülse (13a) eine Haltekraft auszuüben, um die Hülse (13a) an einer im Wesentlichen neutralen Position zu halten, indem die Bewegung der Hülse (13a) beschränkt wird, die sich zu einer Seite der Stoppeinrichtung (19) bewegt, wenn die Hülse (13a) bei der Bewegung von dieser zur Seite der Stoppeinrichtung (19) aufgrund der Außereingriffsschaltbetätigungskraft die im Wesentlichen neutrale Position erreicht,
wobei die Hülsenbewegungsbeschränkungseinrichtung (13a, 18) eine Schaltfeder (18) aufweist, die angepasst ist, sich in die Schaltrichtung zu bewegen, wenn die Hülse (13a) aufgrund der Schaltbetätigungskraft in die Schaltrichtung bewegt wird, und wobei,
wenn die Hülse (13a) aufgrund der Außereingriffschaltbetätigungskraft zur Seite der Stoppeinrichtung (19) bewegt wird, die Schaltfeder angepasst ist, sich zur Seite der Stoppeinrichtung (19) zu bewegen, und,
wenn eine Positionierung in Kontakt mit der Stoppeinrichtung (19) vorliegt, diese angepasst ist, die Haltekraft auf die Hülse (13a) auszuüben, wenn die Hülse (13a) die im Wesentlichen neutrale Position erreicht,
**dadurch gekennzeichnet, dass** die Schaltfeder (18) angepasst ist, die Stoppeinrichtung (19) zu berühren, bevor die Hülse (13a) die Stoppeinrichtung berührt, wenn die Hülse (13a) aufgrund der Außereingriffsschaltbetätigungskraft zur Seite der Stoppeinrichtung (19) bewegt wird.

2. Das Schaltgetriebe nach Anspruch 1, **dadurch gekennzeichnet, dass**
die Betätigungskraft von dem Schalthebel (L) zur Hülse (13a) über einen Betätigungskraftübertragungsmechanismus übertragen wird,
der Betätigungskraftübertragungsmechanismus aufweist: einen Schaltinnenhebel (21), mit einem Armabschnitt (21 b), der aufgrund einer Auswahlbetätigungskraft von dem Schalthebel (L) in eine Auswahlrichtung bewegbar ist, eine Schaltgabelkopfgruppe, in der eine Vielzahl an Paaren von Schaltgabelköpfen (22a, 22b; 23a, 23b; 24a, 24b), von denen jedes Paar von Schaltgabelköpfen zueinander weisend über einen Auswahlrichtungsbewegungspfad des Armabschnitts (21 b) angeordnet ist, entlang des Auswahlrichtungsbewegungspfades des Armabschnitts (21b) angeordnet sind, und in der eines der Paare von Schaltgabelköpfen (22a, 22b; 23a, 23b; 24a, 24b) mit dem Armabschnitt (21 b) auswählend in Eingriff bringbar ist, wenn sich der Armabschnitt (21 b) entlang des Auswahlrichtungsbewegungspfades bewegt, und Gabelwellen (51, 52, 53), von denen sich jede bewegt, wenn ein entsprechendes Paar von Schaltgabelköpfen (22a, 22b; 23a, 23b; 24a, 24b) in die Schaltrichtung von einer neutralen Position durch den Armabschnitt (21 b) des Schaltinnenhebels (21) bewegt wird, der sich in die Schaltrichtung aufgrund der Schaltbetätigungskraft bewegt, die von dem Schalthebel (L) aufgenommen wird, wenn der Armabschnitt (21 b) mit dem entsprechenden Paar von Schaltgabelköpfen (22a, 22b; 23a, 23b; 24a, 24b) auswählend in Eingriff bringbar ist, und,
wenn die Hülse (13a) an der im Wesentlichen neutralen Position durch die Hülsenbewegungsbeschränkungseinrichtung (13a, 18) gehalten wird, der Armabschnitt (21 b) des Schaltinnenhebels (21) angepasst ist, um ein Paar von Schaltgabelköpfen (24a, 24b), das mit dem Armabschnitt (21b) in Eingriff steht, an einer im Wesentlichen neutralen Position in der Schaltrichtung zu halten, die im Wesentlichen mit der Position der anderen Schaltgabelköpfe (22a, 22b; 23a, 23b) in der Schaltrichtung zusammenfällt.

3. Das Schaltgetriebe nach Anspruch 1, **dadurch gekennzeichnet, dass**,
wenn sich die Hülse (13a) an der neutralen Position befindet, ein Intervall zwischen der Schaltfeder (18) und einem Kontaktabschnitt der Stoppeinrichtung (19), den die Schaltfeder (18) berührt, kürzer als ein Intervall zwischen der Hülse (13a) und einem Kontaktabschnitt der Stoppeinrichtung (19), den die Hülse (13a) berührt, ist.

4. Das Schaltgetriebe nach Anspruch 1 oder 3, **dadurch gekennzeichnet, dass** die Schaltfeder (18) ein Spannelement (18b, 18g, 18h), das angepasst ist, um eine Spannkraft zu einer Innenfläche der Hülse (13a) hin auszuüben, und ein Verriegelungselement (18c, 18f) aufweist, das die Spannkraft des Spannelements (18b, 18g, 18h) aufnimmt,
ein eingelassener Abschnitt (13b), mit dem das Verriegelungselement (18c, 18f) zum Eingriff in der Lage ist, in der Innenfläche der Hülse (13a) ausgebildet ist, und
wenn die Hülse (13a) die im Wesentlichen neutrale Position erreicht, wobei sich die Schaltfeder (18) mit der Stoppeinrichtung (19) in Berührung befindet, wenn die Hülse (13a) aufgrund der Außereingriffsschaltbetätigungskraft von dem Schalthebel (L) zur Seite der Stoppeinrichtung (19) bewegt wird, das Verriegelungselement (18c, 18f) aufgrund der Spannkraft des Spannelements (18b, 18g, 18h) in den eingelassenen Abschnitt (13b) der Hülse (13a) passt und daher die Hülse (13a) an der im Wesentlichen neutralen Position hält.

5. Das Schaltgetriebe nach Anspruch 4, **dadurch gekennzeichnet, dass**
sich die Schaltfeder (18) an jedem einer Vielzahl an Orten, die mit gleichen Winkeln in Umfangsrichtung angeordnet sind, an der Innenumfangsseite der Hülse (13a) befindet.

6. Das Schaltgetriebe nach Anspruch 4, **dadurch gekennzeichnet, dass**
das Spannelement (18b, 18g, 18h) eine Schraubenfeder oder eine kreisförmige Feder ist.

7. Das Schaltgetriebe nach Anspruch 4, **dadurch gekennzeichnet, dass** das Verriegelungselement (18c, 18f) eine Verriegelungskugel oder eine plattenförmige Feder ist.

## Revendications

1. Transmission manuelle qui comporte : un arbre de rotation (1) qui transmet une force motrice d'entraînement à partir d'une source d'entraînement ; un moyeu d'embrayage (17) pourvu sur l'arbre de rotation (1) de sorte à tourner intégralement avec l'arbre de rotation (1) ; un manchon (13a) qui s'engage avec un côté périphérique externe du moyeu d'embrayage (17) de sorte à tourner intégralement avec le moyeu d'embrayage (17), et qui, sous l'effet de la force opérationnelle de changement de vitesse provenant d'un levier de vitesse (L), est adapté pour se déplacer dans une direction de changement de vitesse le long d'un axe de l'arbre de rotation (1) d'une position neutre dans laquelle le manchon (13a) ne reçoit pas la force opérationnelle de changement de vitesse de sorte à amener l'arbre de rotation (1) et un engrenage de changement de vitesse à se mettre en rotation de manière synchrone ; une butée (19) qui est adaptée pour limiter une course de déplacement du manchon (13a) lorsque ce dernier se déplace dans une direction de désengagement d'un rapport de vitesse le long de l'axe de l'arbre de rotation (1) en raison d'une force opérationnelle de désengagement du rapport de vitesse reçue du levier de changement de vitesse (L) ; et un moyen de limitation du mouvement du manchon (13a, 18) pour procurer au manchon (13a) une force de maintien pour maintenir le manchon (13a) dans une position essentiellement neutre en limitant le mouvement du manchon (13a) se déplaçant vers un côté de la butée (19) lorsque le manchon (13a) atteint la position essentiellement neutre à mesure que le manchon (13a) se déplace vers la butée (19) sous l'effet de la force opérationnelle de désengagement du rapport de vitesse ;
où le moyen de limitation du mouvement du manchon (13a, 18) comprend une clavette de changement de vitesse (18) qui est adaptée pour se déplacer dans la direction de changement de vitesse lorsque le manchon (13a) se déplace dans la direction de changement de vitesse sous l'effet de la force opérationnelle de changement de vitesse ; et où
lorsque le manchon (13a) se déplace vers la butée (19) sous l'effet de la force opérationnelle de désengagement du rapport de vitesse, la clavette de changement de vitesse est adaptée pour se déplacer vers la butée (19), et
lorsqu'il est positionné en contact avec la butée (19), celui-ci est adapté pour procurer la force de maintien au manchon (13a) lorsque le manchon (13a) atteint la position essentiellement neutre ;
**caractérisée en ce que** la clavette de changement de vitesse (18) est adaptée pour se mettre en contact avec la butée (19) avant que le manchon ne se mette en contact avec la butée lorsque le manchon (13a) se déplace vers la butée (19) sous l'effet de la force opérationnelle de désengagement du rapport de vitesse.

2. Transmission manuelle selon la revendication 1, **caractérisée en ce que** :
la force opérationnelle reçue du levier de changement de vitesse (L) est transmise au manchon (13a) au moyen d'un mécanisme de transmission d'une force opérationnelle ;
le mécanisme de transmission de force opérationnelle comprend : un levier de changement de vitesse interne (21) qui comporte une partie de bras (21b) se déplaçant dans une direction sélectionnée sous l'effet d'une force opérationnelle de sélection reçue du levier de changement de vitesse (L) ; un groupe de têtes de fourchettes de boîte où une pluralité de paires de têtes de fourchettes de boîte (22a, 22b ; 23a, 23b ; 24a, 24b), chaque paire de têtes de fourchettes de boîte étant disposée l'une en face de l'autre à travers un chemin de mouvement d'une direction sélectionnée de la partie de bras (21b), sont disposées le long du chemin du mouvement dans la direction sélectionnée de la partie de bras (21b), et où l'une des paires de têtes de fourchettes de boîte (22a, 22b ; 23a, 23b ; 24a, 24b) devient sélectivement engageable avec la partie de bras (21b) à mesure que la partie de bras (21b) se déplace le long du chemin de déplacement dans la direction sélectionnée ; et des arbres de fourchettes (51, 52, 53) chacune desquelles se déplaçant si une paire correspondante des têtes de fourchettes de boîte (22a, 22b ; 23a, 23b ; 24a, 24b) se déplacent dans la direction de changement de vitesse d'une position neutre par la partie de bras (21b) du levier de changement de vitesse interne (21) se déplaçant dans la direction de changement de vitesse sous l'effet de la force opérationnelle de changement de vitesse reçue du levier de changement de vitesse (L) lorsque la partie de bras (21b) est sélectivement engageable avec une paire correspondante de têtes de fourchettes de boîte (22a, 22b ; 23a, 23b ; 24a, 24b) ; et
lorsque le manchon (13a) est maintenu à la position essentiellement neutre par le moyen de limitation du mouvement du manchon (13a, 18), la partie de bras (21b) du levier de changement de vitesse interne (21) est adaptée pour maintenir une paire de têtes de fourchettes de boîte (24a, 24b) engagée avec la partie de bras (21b), à une position essentiellement neutre dans la direction de changement de vitesse qui coïncide essentiellement avec la position des autres têtes de fourchettes de boîte (22a, 22b ; 23a, 23b) dans la direction de changement de vitesse.

3. Transmission manuelle selon la revendication 1, **caractérisée en ce que**
lorsque le manchon (13a) est à une position neutre, un intervalle entre la clavette de changement de vitesse (18) et une partie de contact de la butée (19) avec laquelle la clavette de changement de vitesse (8) se met en contact est plus court qu'un intervalle entre le manchon (13a) et une partie de contact de la butée (19) avec laquelle le manchon (13a) se met en contact.

4. Transmission manuelle selon la revendication 1 ou 3, **caractérisée en ce que** :
la clavette de changement de vitesse (18) comprend un élément poussoir (18b, 18g, 18h) qui est adapté pour procurer une force de poussée vers une surface interne du manchon (13a), et un élément de verrouillage (18c, 18f) qui reçoit la force de poussée de l'élément poussoir (18b, 18g, 18h) ;
une partie en évidement (13b) avec laquelle l'élément de verrouillage (18, 18f) peut s'engager est formée dans la surface interne du manchon (13a) ; et
lorsque le manchon (13a) atteint la position essentiellement neutre avec la clavette de changement de vitesse (18) étant en contact avec la butée (19) à mesure que le manchon (13a) se déplace vers la butée (19) sous l'effet de la force opérationnelle de changement de vitesse reçue du levier de changement de vitesse (L), l'élément de verrouillage (18, 18f) s'ajuste dans la partie en évidement (13b) du manchon (13a) sous l'effet de la force de poussée de l'élément poussoir (18b, 18g, 18h), et maintient par conséquent le manchon (13a) à la position essentiellement neutre.

5. Transmission manuelle selon la revendication 4, **caractérisée en ce que**
la clavette de changement de vitesse (18) est disposée à chacun d'une pluralité d'emplacements qui sont agencés de manière équi-angulaire dans la direction circonférentielle, au côté périphérique interne du manchon (13a).

6. Transmission manuelle selon la revendication 4, **caractérisée en ce que**
l'élément poussoir (18b, 18g, 18h) est un ressort à bobine ou un ressort circulaire.

7. Transmission manuelle selon la revendication 4, **caractérisée en ce que**
l'élément de verrouillage (18c, 18f) est une bille de verrouillage ou une clavette lamellaire.
